# FASCICULE DE BREVET EUROPEEN

(11) **EP 0 407 255 B1**
(45) Date de publication et mention de la délivrance du brevet: **24.05.1995**
(21) Numéro de dépôt: 90401737.3
(22) Date de dépôt: 20.06.1990
(51) Int. Cl.: B01D 29/72, B01D 29/60

(54) **Dispositif de filtration à nettoyage automatique pour circuit de liquide**
Filter zur automatischen Reinigung von Flüssigkeitskreisläufen
Filter for the automatic purification of liquid circuits

(30) Priorité: 07.07.1989 FR 8909161
(43) Date de publication de la demande: 09.01.1991
(73) Titulaire: Gabet, André, F-95150 Taverny (FR)
(72) Inventeur: Gabet, André, F-95150 Taverny (FR)
(74) Mandataire: Chambon, Gérard

(56) Documents cités:
- EP-A- 0 176 867
- EP-A- 0 370 849
- AT-B- 332 890
- DE-A- 2 225 057
- DE-A- 2 449 817
- DE-A- 3 117 712
- DE-A- 3 613 041
- DE-C- 858 539
- DE-U- 8 805 945
- FR-A- 2 421 661

## Description

L'invention concerne un dispositif de filtration pour circuit de liquide, comportant au moins un filtre disposé dans le passage du liquide.

Il est connu de filtrer les circuits de liquide, au moyen d'un filtre généralement en forme de panier à travers lequel le liquide est contraint de circuler.

Pour nettoyer un tel système, il est alors nécessaire de retirer le filtre et d'effectuer un nettoyage à un poste de travail équipé en conséquence. Une telle opération oblige l'utilisateur à effectuer un démontage et peut aussi le contraindre à fermer le circuit pendant cette opération.

C'est pourquoi il a aussi été imaginé des systèmes munis de raclettes ou similaires destinées à venir retirer les impuretés du filtre. De tels systèmes mécaniques présentent aussi leurs inconvénients et leurs limites.

Par ailleurs, il est connu d'effectuer le nettoyage de certaines pièces mécaniques ou autres, en les plongeant dans un bain soumis à des ultrasons, lesdites pièces étant ensuite retirées dudit bain.

La demande de brevet EP-0370849 déposée le 31.10.89, revendiquant une priorité en date du 07.11.88, publiée le 30.05.90, désignant en particulier l'Allemagne et le Royaume-Uni, et le document FR-A-2421661 cité dans la demande Européenne précitée, décrivent des dispositifs de filtration à nettoyage automatique pour circuit de liquide comportant au moins un filtre disposé dans le passage dudit liquide, une cuve de décantation des impuretés et un générateur d'ultrasons pourvu d'un transducteur.

L'inventeur a imaginé un dispositif de filtration de ce type, mais qui est tout à fait original dans le choix du filtre et les moyens mis en oeuvre pour assurer le nettoyage automatique dudit filtre.

Le dispositif selon l'invention est en effet remarquable en ce que le filtre est aménagé au-dessus de la cuve de décantation et présente la forme d'un panier ou d'une cloche dont l'ouverture est tournée vers ladite cuve, tandis que le transducteur est disposé sur un volume en saillie sur la cuve pour pouvoir générer des ultrasons dans ladite cuve.

De préférence selon les applications, une dérivation du circuit de liquide, munie d'une vanne de commande de dérivation est prévue pour pouvoir court-circuiter au moins en partie l'ensemble de filtrage comprenant le filtre et la cuve.

Avantageusement, ce dispositif comporte un moyen de mesurage du taux de colmatage du filtre. Ce moyen de mesurage est par exemple constitué par un manomètre différentiel aménagé de manière à mesurer la différence des pressions entre l'amont et l'aval par rapport audit filtre.

De préférence, la cuve de décantation est branchée sur un circuit d'évacuation par l'intermédiaire d'une vanne d'évacuation.

Selon un mode de réalisation, une vanne supplémentaire est prévue sur le circuit du liquide en amont de l'ensemble de filtrage.

Pour des raisons de bon fonctionnement du générateur d'ultrasons, la cuve présente une partie cylindrique sur laquelle est aménagé le volume en saillie, lequel présente une forme générale parallélépipédique, tandis que le transducteur est appliqué sur la grande face plane dudit volume en saillie.

Pour un dispositif pourvu d'une vanne de dérivation, d'un moyen de mesurage du taux de colmatage et d'une vanne d'évacuation des impuretés, ledit dispositif peut comporter avantageusement une centrale de commande connectée au moyen de mesurage du taux de colmatage et aux vannes respectivement de commande de dérivation et d'évacuation, de façon à pouvoir assurer un cycle automatique de nettoyage du filtre.

De préférence dans ce cas, la centrale de commande est programmée de manière à assurer un cycle de nettoyage du filtre en actionnant les divers moyens de la manière suivante: ouverture de la vanne de commande de dérivation, mise en fonctionnement du générateur d'ultrasons, arrêt dudit générateur, ouverture de la vanne d'évacuation, puis fermeture simultanément ou successivement des vannes de commande de dérivation et d'évacuation.

Le déclenchement de début du cycle de nettoyage du filtre est par exemple assuré par le moyen de mesurage du taux de colmatage et/ou selon une programmation qui est fonction du circuit à filtrer.

En effet, le dispositif selon l'invention peut être utilisé dans un circuit de refroidissement ou de chauffage ou autre, de telle sorte que la programmation de déclenchement du cycle de nettoyage pourra dépendre de l'application (déclenchements périodiques, selon la consommation de liquide...).

L'invention sera bien comprise et d'autres particularités apparaîtront à la lecture de la description qui va suivre et qui se réfère aux dessins annexés dans lesquels:
- la figure 1 montre en coupe (sauf la cuve de décantation vue en élévation) un dispositif selon l'invention,
- la figure 2 est une vue de la cuve de décantation selon la flèche F de la figure 1,
- la figure 3 est une coupe selon III-III de la figure 2.

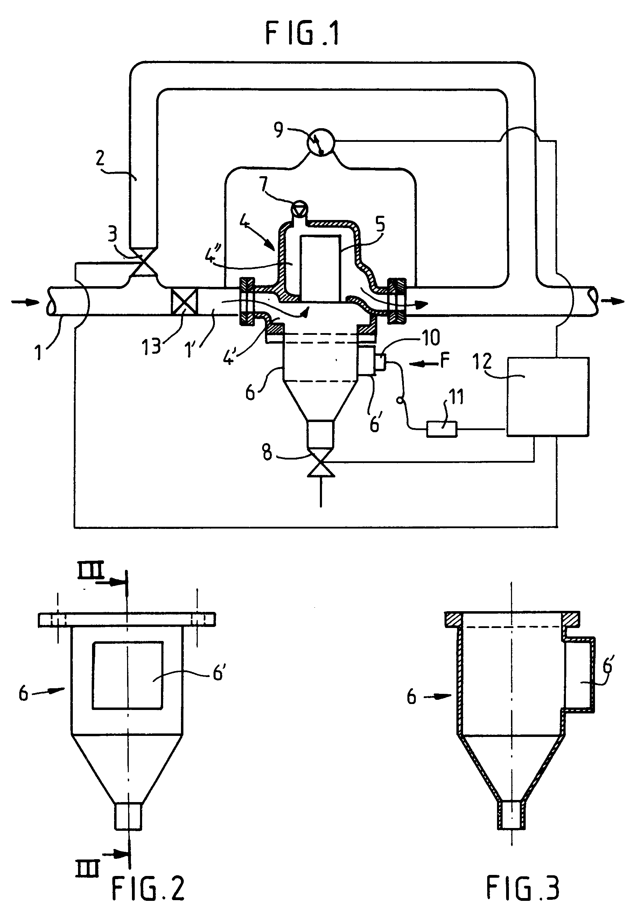

La figure 1 montre une canalisation 1 qui représente le circuit du liquide à filtrer.

Sur la canalisation 1 est montée une dérivation 2 à l'entrée de laquelle est prévue une vanne 3 de commande de dérivation.

Sur la partie 1' de la canalisation 1 qui peut ainsi être court-circuitée, est installé un ensemble de filtrage comprenant un corps 4 formant un parcours de circulation pour le liquide et ménageant une chambre d'entrée 4' et une chambre supérieure 4'' dans laquelle est disposé un filtre 5.

Comme le montre bien la figure 1, le filtre se présente sous la forme d'une cloche ou d'un panier renversé disposé par sa partie ouverte au-dessus de la chambre 4', elle-même située au-dessus d'une cuve 6 de décantation fixée sur le corps 4.

Comme l'indiquent les flèches du dessin, le liquide est contraint de passer par l'intérieur du filtre 5, de telle sorte que c'est la paroi amont dudit filtre qui est tournée vers la cuve 6.

Dans la chambre 4'' du corps 4 qui est donc une chambre aval par rapport au filtre 5, est installé un dégazeur 7 destiné à éliminer les éventuelles poches d'air présentes dans le corps 4.

En bas de la cuve 6 de décantation est prévue une vanne 8 d'évacuation, branchée par exemple sur une canalisation d'évacuation (non représentée) destinée à drainer les impuretés et saletés vers les égouts.

Il est intéressant de noter au passage qu'en régime courant, c'est-à-dire en dehors des périodes de nettoyage dont il sera question plus en détail ci-après, la cuve 6 sert d'élément de récupération des grosses et/ou lourdes impuretés qui pourraient se trouver dans le réseau.

Un manomètre différentiel 9 est disposé, comme le montre la figure 1, de manière à mesurer la différence des pressions entre l'amont et l'aval de l'ensemble de filtrage (4, 5, 6).

La cuve 6 de décantation, montrée plus en détail sur les figures 2 et 3, de forme générale, par exemple cylindro-conique, présente un petit volume 6' de forme parallélépipédique sur la grande face de laquelle est appliqué un transducteur 10 relié à un générateur d' ultrasons 11. Ce volume 6' permet de mieux répondre aux contraintes particulières exigées par le transducteur 10 et lui assure un meilleur fonctionnement.

Les vannes 3 et 8 sous forme par exemple d'électro-vannes sont connectées électriquement, comme le montre la figure 1, à une centrale de commande 12, à laquelle sont également connectés le manomètre différentiel 9 et le générateur d'ultrasons 11.

La figure 1 montre aussi une vanne 13 disposée à l'entrée de la partie 1' de la canalisation 1.

La centrale 12 permet d'assurer un cycle de nettoyage du filtre 5 par exemple selon la programmation suivante:
a) ouverture de la vanne 3 pour assurer la dérivation du liquide,
b) mise en fonction du générateur d'ultrasons pendant un certain temps, choisi en fonction de l'importance du colmatage du filtre 5 et de la nature des impuretés,
c) arrêt du générateur 11, la vanne 3 restant ouverte de manière à faciliter le nettoyage du filtre par contre-pression,
d) ouverture de la vanne 8 pour l'évacuation des impuretés après décantation,
e) puis fermeture des vannes 3 et 8 simultanément ou successivement de manière à remettre le système à l'état initial.

Le démarrage du cycle peut être déclenché par une action manuelle en fonction, par exemple, de la mesure effectuée par le manomètre 9 qui indique par la mesure de la différence des pressions, l'importance du colmatage du filtre 5, ou encore automatiquement par un signal provenant dudit manomètre.

Toutefois, il est clair que selon les applications, il peut être souhaité de déclencher le cycle aussi selon d'autres critères comme déjà dit, et la centrale 12 peut alors être programmée en conséquence.

La vanne 13 qui est éventuelle, permet de minimiser les pertes, les vannes 3 et 13 pouvant en outre être remplacées par une seule vanne à trois voies.

De plus, si la dérivation 2 permet d'éviter de fermer le circuit pendant le nettoyage, il est possible selon les applications de la supprimer. Toutefois, ce n'est généralement pas un inconvénient de dériver le circuit principal pendant le nettoyage selon certaines applications à circuit continu (circuit de refroidissement par exemple) pour lesquelles souvent un pourcentage seulement du liquide en circulation est filtré à chaque passage.

## Revendications

1. Dispositif de filtration à nettoyage automatique pour circuit de liquide comportant au moins un filtre (5) disposé dans le passage dudit liquide, une cuve (6) de décantation des impuretés et un générateur d'ultrasons (11) pourvu d'un transducteur (10), caractérisé en ce que le filtre (5) est aménagé au-dessus de la cuve (6) de décantation et présente la forme d'un panier ou d'une cloche dont l'ouverture est tournée vers ladite cuve, tandis que le transducteur (10) est disposé sur un volume (6') en saillie sur la cuve (6) pour pouvoir générer des ultrasons dans ladite cuve.

2. Dispositif selon la revendication 1, caractérisé en ce qu'une dérivation du circuit de liquide, munie d'une vanne (3) de commande de dérivation est prévue pour pouvoir court-circuiter au moins en partie l'ensemble de filtrage comprenant le filtre (5) et la cuve (6).

3. Dispositif selon l'une des revendications 1 et 2, caractérisé en ce qu'il comporte un moyen de mesurage du taux de colmatage du filtre (5).

4. Dispositif selon la revendication 3, caractérisé en ce que le moyen de mesurage du taux de colmatage du filtre (5) est un manomè-tre différentiel (9) aménagé de manière à mesurer la différence des pressions entre l'amont et l'aval par rapport audit filtre (5).

5. Dispositif selon l'une des revendications 1 à 4, caractérisé en ce que la cuve (6) de décantation est branchée sur un circuit d'évacuation par l'intermédiaire d'une vanne d'évacuation (8).

6. Dispositif selon l'une des revendications 1 à 5, caractérisé en ce qu'une vanne supplémentaire (13) est prévue sur le circuit du liquide en amont de l'ensemble de filtrage.

7. Dispositif selon l'une des revendications 1 à 6, caractérisé en ce que la cuve (6) de décantation présente une partie cylindrique sur laquelle est aménagé le volume (6') en saillie, lequel présente une forme générale parallélépipédique tandis que le transducteur (10) est appliqué sur la grande face plane dudit volume en saillie.

8. Dispositif selon l'ensemble des revendications 1, 2, 3 et 5, caractérisé en ce qu'il comporte une centrale de commande (12) connectée au moyen de mesurage (9) du taux de colmatage et aux vannes respectivement de commande de dérivation (3) et d'évacuation (8), de façon à pouvoir assurer un cycle automatique de nettoyage du filtre (5).

9. Dispositif selon la revendication 8, caractérisé en ce que la centrale de commande (12) est programmée de manière à assurer un cycle de nettoyage du filtre (5) en actionnant les divers moyens de la manière suivante: ouverture de la vanne (3) de commande de dérivation, mise en fonctionnement du générateur d'ultrasons (11), arrêt dudit générateur (11), ouverture de la vanne (8) d'évacuation, puis fermeture simultanément ou successivement des vannes de commande de dérivation (3) et d'évacuation (8).

10. Dispositif selon la revendication 9, caractérisé en ce que le déclenchement de début du cycle de nettoyage du filtre est assuré par le moyen de mesurage (9) du taux de colmatage et/ou selon une programmation qui est fonction du circuit à filtrer.

## Claims

1. Device for filtering with automatic cleaning for a liquid circuit comprising at least one filter (5) disposed in the passage of said liquid, a cup (6) for settlement of the impurities and an ultrasound generator (11) provided with a transducer (10), characterized in that the filter (5) is disposed above the settling cup (6) and exhibits the form of a basket or a bell the opening of which faces said cup, while the transducer (10) is disposed over a volume (6') projecting over the cup (6) to be able to generate ultrasounds in said cup.

2. Device according to claim 1, characterised in that a liquid circuit bypass, fitted with a bypass control valve (3) is provided to be able to short-circuit at least partly the filtering assembly comprising the filter (5) and the cup (6).

3. Device according to one of claims 1 and 2, characterized in that it comprises a means for measuring the level of clogging of the filter (5).

4. Device according to claim 3, characterized in that the means for measuring the level of clogging of the filter (5) is a differential pressure gauge (9) disposed so as to measure the difference in the pressures between the upstream and downstream parts in relation to said filter (5).

5. Device according to one of claims 1 to 4, characterized in that the settling cup (6) is connected to a discharge circuit through the intermediary of a discharge valve (8).

6. Device according to one of claims 1 to 5, characterized in that an additional valve (13) is provided on the liquid circuit upstream of the filtering assembly.

7. Device according to one of claims 1 to 6, characterized in that the settling cup (6) exhibits a cylindrical part over which is disposed the projecting volume (6') which exhibits a generally parallelepiped form, while the transducer (10) is applied on the large plane face of said projecting volume.

8. Device according to all of claims 1, 2, 3 and 5, characterized in that it comprises a central control unit (12) connected to the means (9) for measuring the level of clogging and to the bypass control valve (3) and discharge valve (8) respectively so as to be able to provide an automatic cleaning cycle for the filter (5).

9. Device according to claim 8, characterized in that the central control unit (12) is programmed so as to provide a cleaning cycle for the filter (5) by activating the various means in the following way: opening the bypass control valve (3), actuation of the ultrasound generator (11), stoppage of said generator (11), opening of the discharge valve (8), then simultaneous or successive closure of the bypass control valve (3) and discharge valve (8).

10. Device according to claim 9, characterized in that the triggering of the start of the cleaning cycle for the filter is effected by the means (9) for measuring the level of clogging and/or according to programming which is a function of the circuit to be filtered.

## Patentansprüche

1. Filtrationsvorrichtung zur automatischen Reinigung eines Flüssigkeitskreislaufs, die wenigstens ein Filter (5), welches sich im Fließweg dieser Flüssigkeit befindet, einen Klärkasten (6) für die Verunreinigungen sowie einen mit einem Wandler (10) versehenen Ultraschall-Generator (11) aufweist, dadurch gekennzeichnet, daß das Filter (5) oberhalb des Klärkastens (6) angebracht ist und die Form eines Korbes oder einer Glocke aufweist, dessen bzw. deren Öffnung diesem Klärkasten zugekehrt ist, während der Wandler (10) an einem vorspringenden Raum (6') an dem Klärkasten angeordnet ist, um in diesem Kasten Ultraschall erzeugen zu können.

2. Vorrichtung gemäß Anspruch 1, dadurch gekennzeichnet, daß eine Umgehungsleitung des Flüssigkeitskreislaufes vorgesehen ist, die mit einem Ventil (3) zur Steuerung der Umgehungsleitung versehen ist, um zumindest teilweise die Filtrationseinrichtung mit dem Filter (5) und dem Kasten (6) überbrücken zu können.

3. Vorrichtung gemäß einem der Ansprüche 1 und 2, dadurch gekennzeichnet, daß sie ein Mittel zur Messung des Ausmasses der Ablagerungen auf dem Filter aufweist.

4. Vorrichtung gemäß Anspruch 3, dadurch gekennzeichnet, daß das Mittel zur Messung des Ausmasses der Ablagerungen auf dem Filter (5) ein Differentialdruckmesser (9) ist, der so eingerichtet ist, daß er die Druckunterschiede zwischen dem strömungsoberseitigen Bereich und dem strömungsunterseitigen Bereich des Filters (5) mißt.

5. Vorrichtung gemäß einem der Ansprüche 1 bis 4, dadurch gekennzeichnet, daß der Klärkasten (6) mittels eines Ablaufventils (8) an einen Ablaufkreis angeschlossen ist.

6. Vorrichtung gemäß einem der Ansprüche 1 bis 5, dadurch gekennzeichnet, daß ein zusätzliches Ventil (13) im Flüssigkeitskreislauf strömungsoberseitig der Filtrationseinrichtung vorgesehen ist.

7. Vorrichtung gemäß einem der Ansprüche 1 bis 6, dadurch gekennzeichnet, daß der Klärkasten (6) einen zylinderförmigen Abschnitt aufweist, an welchem der vorspringende Raum (6') angeordnet ist, welcher eine allgemein parallelepipedische Form besitzt, während der Wandler (10) auf der großen ebenen Fläche dieses vorspringenden Raumes befestigt ist.

8. Vorrichtung gemäß den Ansprüche 1, 2, 3 und 5, dadurch gekennzeichnet, daß sie eine Steuerzentrale (12) aufweist, die mit dem Mittel (9) zur Messung des Ausmasses der Ablagerungen auf dem Filter und den Ventilen (8, 9) zum Steuern der Umgehungsleitung bzw. des Ablaufs derart verbunden ist, daß ein automatischer Zyklus zur Reinigung des Filters bewirkt werden kann.

9. Vorrichtung gemäß Anspruch 8, dadurch gekennzeichnet, daß die Steuerzentrale (12) in der Weise programmiert ist, daß ein Zyklus zur Reinigung des Filters (5) dadurch bewirkt wird, daß die einzelnen Mittel folgendermaßen in Betrieb gesetzt werden: Öffnen des Ventils (3) zum Steuern der Umgehungsleitung, Einschalten des Ultraschall-Generators (11), Abschalten dieses Generators (11), Öffnen des Ablaufventils (8), dann gleichzeitiges oder nacheinander erfolgendes Schließen der Ventile (3, 8) zur Steuerung der Umgehungsleitung und des Ablaufs.

10. Vorrichtung gemäß Anspruch 9, dadurch gekennzeichnet, daß das Auslösen des Beginns des Zyklus' zur Reinigung des Filters durch das Mittel (9) zur Messung des Ausmasses der Ablagerungen auf dem Filter und/oder gemäß einer Programmierung, die von dem zu filtrierenden Kreislauf abhängt, bewirkt wird.
